# EUROPÄISCHE PATENTANMELDUNG

(11) **EP 0 720 122 A2**
(43) Veröffentlichungstag der Anmeldung: **03.07.1996**
(21) Anmeldenummer: 95119650.0
(22) Anmeldetag: 13.12.1995
(51) Int. Cl.: G06K 19/077, G06K 19/02, G06K 19/04

(54) **Mobiler hitzefester Datenspeicher**

(30) Priorität: 27.12.1994 DE 9420774 U
(71) Anmelder: SIEMENS AKTIENGESELLSCHAFT, D-80333 München (DE)
(72) Erfinder: Müller, Klaus, D-91058 Erlangen (DE)

(57) **Zusammenfassung**

Der Datenspeicher weist einen Isolierkörper (OIK,UIK) mit einer möglichst zentrisch im Inneren befindlichen Aufnahmekammer auf (AA). In die Aufnahmekammer (AA) ist ein Aufnahmeblock (AK) einlegbar. Dieser ist aus einem Material gefertigt, welches im Vergleich zum umgebenden Isolierkörper (OIK, UIK) eine große Wärmekapazität und Wärmeleitfähigkeit besitzt. Der Aufnahmeblock (AK) weist möglichst zentrisch im Inneren ein Aufnahmefach (AF) für elektrische Funktionselemente (BE) auf, welches mit einem Abdeckblock (AB) verschließbar ist. Diese Anordnung hat den Vorteil, daß sich trotz einer möglichen Verkleinerung in der Bauform eine geringere stationäre Temperatur im Aufnahmefach einstellt, wenn der Datenspeicher zyklisch Erhitzungs- und Abkühlungsphasen ausgesetzt ist. Vorteilhaft ist der Aufnahmeblock (AK) aus Eisen, aus einem keramischem Material, insbesondere aus einem keramischen Stein oder aus Olivinstein, oder aus oxydischem Material gefertigt, insbesondere aus einem Aluminium-Zyakon-Oxyd.

## Beschreibung

Aus dem Deutschen Gebrauchsmuster G 92 05 049.2 ist eine hermetisch abgeschlossene, temperaturbeständige Datenspeichervorrichtung bekannt. Das Innere des Gehäuses dieser Vorrichtung ist bis auf einen Hohlraum nahezu vollständig mit Wärmedämmstoff gefüllt. In diesen sind die elektrischen Funktionselemente der Vorrichtung, insbesondere Datenspeicher- und Energieversorgungselemente, eingelegt.

Bei einer Anordnung dieser Art tritt zum einen das Problem auf, daß die bis auf den Hohlraum nahezu vollständige Anfüllung des Gehäuseinneren mit dem Wärmedämmstoff ein relativ großes Bauvolumen des gesamten Gehäuses verursacht. Hierdurch wird die Handhabbarkeit der Vorrichtung eingeschränkt.

Das wesentliche Problem dieser bekannten Vorrichtung besteht aber darin, daß der Wärmedämmstoff bei starker äußerer Erwärmung des Gehäuses zwar das Eindringen von Wärme in den die elektrischen Funktionselemente enthaltenden Hohlraum verzögert. Nur mit der gleichen Verzögerung kann aber in einer nachfolgenden Abkühlungsphase der Vorrichtung die Wärme wieder aus dem Hohlraum entweichen. Wird eine derartige Vorrichtung einem zyklischen Wechselspiel von Erhitzungs- und Abkühlphasen ausgesetzt, wie dies z.B. beim Einsatz derartiger Datenträger bei Lackiereinrichtungen für Karosserien in der Automobilindustrie der Fall ist, so stellt sich eine relativ hohe stationäre Temperatur im Inneren des Hohlraumes ein. Hierdurch kann die Lebensdauer dort befindlicher Datenspeicher- und Energieversorgungselemente eingeschränkt werden.

Der Erfindung liegt die Aufgabe zugrunde, eine mobile, hitzefeste Datenspeichervorrichtung anzugeben, bei der sich trotz reduzierten äußeren Abmessungen und verringertem Bauvolumen eine geringere stationäre Temperatur in dem die elektrischen Funktionselemente aufnehmenden Bereich einstellt, wenn die Datenspeichervorrichtung einem Zyklus von aufeinanderfolgenden Erhitzungen und Ahkühlungen ausgesetzt wird.

Die Aufgabe wird gelöst mit der im Anspruch 1 angegebenen Vorrichtung. Der erfindungsgemäße hitzefeste Datenspeicher enthalt einen Isolierkörper, der möglichst zentrisch im Inneren eine Aufnahmekammer aufweist. In diese Aufnahmekammer ist ein Aufnahmeblock einlegbar. Der Aufnahmeblock ist aus einem Material gefertigt, welches im Vergleich zum umgebenden Isolierkörper eine große Wärmekapazität und Wärmeleitfähigkeit besitzt. Im Inneren weist der Aufnahmeblock möglichst zentrisch ein Aufnahmefach für die elektrischen Funktionselemente des mobilen Datenspeichers auf, insbesondere für elektrische Speicherbausteine und eine sogenannte Transponderschaltung zum Datenaustausch auf induktivem Wege. Das Aufnahmefach im Inneren des Aufnahmeblocks ist bevorzugt durch einen von außen auf den Einschubschlitz des Aufnahmefaches auflegbaren bzw. in den Schlitz einschiebbaren Abdeckblock verschließbar. Dieser weist bevorzugt eine mit der Wanddicke des das Aufnahmefach umgebenden Aufnahmeblocks vergleichbare Materialstärke auf und ist bevorzugt aus dem gleichen Material gefertigt.

Die Erfindung zeichnet sich dadurch aus, daß die im Aufnahmefach des Aufnahmeblockes eingebetteten elektrischen Funktionselemente des mobilen Datenspeichers möglichst gleichmäßig in allen Raumrichtungen von einer ersten Lage des gut wärmeleitfähigen und eine hohe Wärmekapazität aufweisenden Materials der Aufnahmeblocks, und einer zweiten, darauf aufliegenden Lage des wenig wärmeleitfähigen und eine geringe Wärmekapazität aufweisenden Materials des Isolierkörpers umgeben sind. Die in ihren wärmetechnischen Eigenschaften nahezu konträren Materialien des Aufnahmeblockes und des Isolierkörpers ergänzen sich in einer sehr vorteilhaften Weise. Die hiermit erreichte Einbettung der elektrischen Funktionselemente hat nämlich den besonderen Vorteil, daß sich insbesondere in dem Fall, daß der Datenspeicher einem zyklischen Wechselspiel von Erhitzungs- und Abkühlphasen ausgesetzt ist, im Vergleich zur nur einlagigen, vollständigen Umhüllung mit Wärmedämmstoff eine geringere stationäre Temperatur in dem Aufnahmefach für die elektrischen Funktionselemente einstellt. Während der Isolierkörper naturgemäß das Eindringen von Wärme an die elektrischen Funktionselemente verzögert, wirkt das eine große Wärmekapazität und eine gute Wärmeleitfähigkeit aufweisende Material des Aufnahmeblockes in diesem Fall wärmeverteilend und wie eine Wärmesenke. Somit wird auch durch das Material des Aufnahmeblockes der Temperaturanstieg im Aufnahmefach deutlich gehemmt. Diese Materialeigenschaften begünstigen aber insbesondere auch die Wärmeabfuhr während einer Abkühlungsphase.

Ein weiterer Vorteil der erfindungsgemäßen Anordnung besteht darin, daß durch die Kombination eines äußeren Isolierkörpers mit einem inneren Aufnahmeblock, und deren Werkstoffeigenschaften, die äußeren Abmessungen eines derart aufgebauten Datenträgers im Vergleich zu einem vollständig nur mit Wärmedämmstoff gefüllten Datenträger erheblich reduziert werden können. Insbesondere kann die Wandstärke des Isolierkörpers stark verringert werden.

Es ist weiterhin vorteilhaft, wenn der Aufnahmeblock eine zylindrische Form aufweist, und gegebenenfalls zusätzlich die den Aufnahmeblock enthaltende Aufnahmekammer symmetrisch zur Radialachse des Isolierkörpers angeordnet ist. In diesem Fall kommt der Aufnahmblock zentrisch nahezu vollständig in der Mitte des Datenspeichers zu liegen. Die in die Aufnahmekammer eingeschobenen elektrischen Funktionselemente sind dann in allen radialen Raumrichtungen nahezu gleichmäßig vom Material des Aufnahmeblockes und vom Material des diesen umgebenden Isolierkörpers umgeben.
Bevorzugt ist der Aufnahmeblock aus Eisen gefertigt, welches sowohl über eine hohe Wärmeleitfähigkeit als auch eine große Wärmekapazität verfügt. Auch keramische Materialien, insbesondere keramische Steine oder Olivinstein, oder oxydische Materialien, insbesondere Aluminium-Zyakon-Oxyd, sind als Baustoffe für den Aufnahmeblock gut geeignet.

Vorteilhafte weitere Ausführungen derselben sind in den Unteransprüchen angegeben. Die Erfindung wird mit den in den nachfolgend kurz angeführten Figuren dargestellten Beispielen weiter erläutert. Dabei zeigt
- Fig.1a - 1c :: eine erste Ausführungsform für einen Aufnahmeblock für elektrische Funktionselemente, welcher eine quaderförmige Form aufweist und mit einer rechteckförmigen Abdeckplatte verschließbar ist,
- Fig.2a - 2b :: eine erste Ausführungsform des erfindungsgemäßen Datenspeichers, in dessen Inneren symmetrisch zur Radialachse die Aufnahmekammer für einen gemäß der Fig. 1a bis 1c ausgeführten Aufnahmeblock angeordnet ist,
- Fig.3a - 3c :: eine zweite Ausführungsform für einen Aufnahmeblock für elektrische Funktionselemente, welcher eine zylinderförmige Form aufweist und mit einer annähernd kreisförmigen Abdeckplatte verschließbar ist,
- Fig.4a - 4b :: eine zweite Ausführungsform des erfindungsgemäßen Datenspeichers, in dessen Inneren symmetrisch zur Radialachse die Aufnahmekammer für einen gemäß der Fig. 3a bis 3c ausgeführten Aufnahmeblock angeordnet ist,
- Fig.5 :: eine mit Bauelementen bestückte Leiterplatte als ein Beispiel für in die Aufnahmekammer des Aufnahmeblocks einlegbare elektrische Funktionselemente.

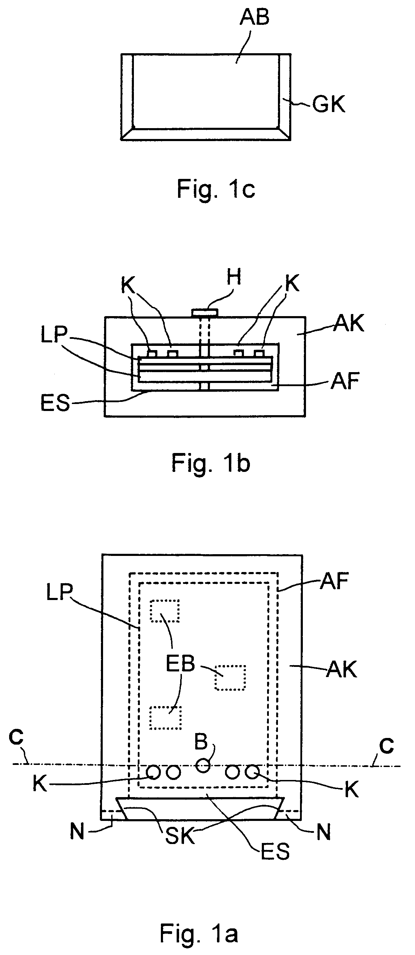

In Figur 1a ist der Querschnitt durch eine erste Ausführungsform eines Aufnahmeblocks AK für elektrische Funktionselemente dargestellt. Dieser weist eine quaderförmige Form auf. Das Aufnahmefach AF im Inneren ist strichliert dargestellt und von außen über einen Einschubschlitz ES zugänglich, der bevorzugt an einer Schmalseite des Quaders angebracht ist. In das Aufnahmefach AF ist beispielhaft eine Leiterplatte LP eingeschoben, welche mit BE bezeichnete, exemplarisch dargestellte Funktionselemente der mobilen Datenspeichervorrichtung trägt. Es handelt sich dabei um Speicherelemente und um Schaltungsteile, womit bevorzugt auf berührungslosem, induktivem Wege neue Daten von außen empfangen und in die Speicherelemente eingetragen, bzw. bei Bedarf der Inhalt der Speicherelemente abgesendet werden kann. Derartige Schaltungsteile werden auch als Transponder bezeichnet.

An der dem Einschubschlitz ES zugewandten Seite der Leiterplatte LP sind in Figur 1a Anschlußkontakte K dargestellt, an welche Verbindungskabel zum Anschluß einer Sende- und Empfangsantenne angebracht werden können. Zur Herausführung und Verlegung derartiger Kabel sind bevorzugt Nuten N beidseitig des Einschubschlitzes ES in den Aufnahmeblock AK eingelassen.

In Fig.1b ist ein Längsschnitt entlang der Schnittachse C-C von Fig.1a dargestellt. Dabei ist deutlich die gleichmäßige Umhüllung der in diesem Fall beispielhaft zweilagigen Leiterplatte LP durch das Material des Aufnahmeblockes AK zu erkennen. Zur Fixierung der Leiterplatte LP wird beispielhaft eine Halteschraube H durch die Wandung des Aufnahmeblockes AK und durch eine Bohrung B der Leiterplatte LP hindurchgeführt.

In Fig.1c ist schließlich in einer Draufsicht ein zum Verschluß des Aufnahmefaches AF im Aufnahmeblock AK der Fig.1a geeigneter, rechteckförmiger Abdeckblock AB dagestellt. Dieser weist bevorzugt an drei Seiten abgeschrägte Kanten GK auf. Hierüber kann der Abdeckblock vorteilhaft in schwalbenschwanzförmige Seitenkanten SK, welche beidseitig des Einschubschlitzes ES an der entsprechenden Stirnseite des Aufnahmeblockes AK angebracht sind, eingeschoben werden. Es wird damit ein mechanisch sicherer und wärmetechnisch ausreichend dichter Verschluß des Aufnahmefaches erreicht.

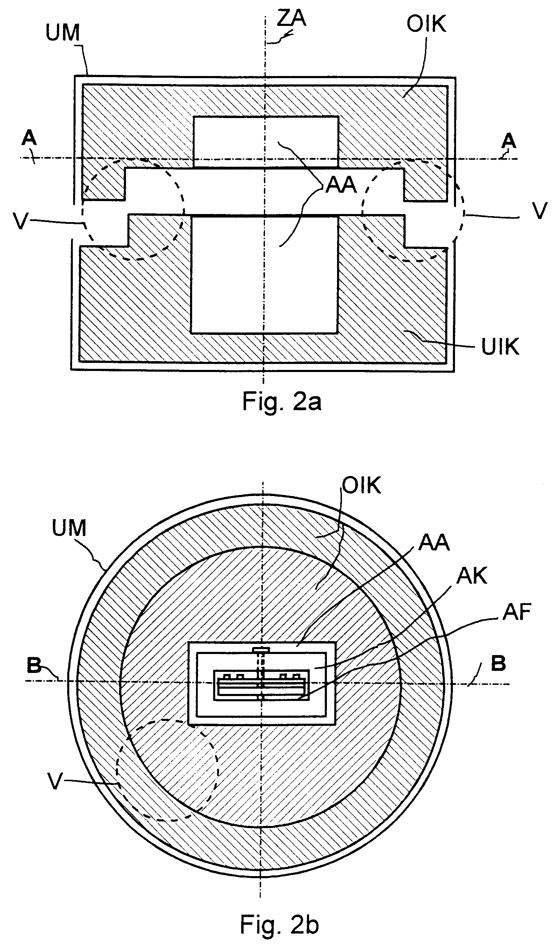

In den Figuren 2a und 2b sind ein Längsschnitt entlang einer Schnittlinie B-B und ein Querschnitt entlang einer Schnittlinie A-A durch einen kompletten, hitzefesten Datenspeicher dargestellt. Dieser weist vorteilhaft eine zylindrische Form mit der zentralen, radialen Symmetrieachse ZA auf. Vorteilhaft ist die Aufnahmekammer AA symmetrisch zur Symmetrieachse ZA angeordnet. Ein somit in die Aufnahmekammer eingelegter und bevorzugt gemäß der Ausführungsform der Fig.1a bis 1c gestalteter Aufnahmeblock AK kommt somit zentrisch in der Mitte des Datenspeichers zu liegen. Dies ist insbesondere an der Querschnittdarstellung von Fig. 2b zu erkennen. Das Aufnahmefach AF ist somit in allen Raumrichtungen näherungsweise gleichmäßig vom Material des Aufnahmeblocks und vom Material des Isolierkörpers umgeben.

Der in Fig. 2a dargestellte Datenspeicher ist vorteilhaft zweiteilig ausgeführt. Dabei ist der Isolierkörper in ein Oberteil OIK und ein Unterteil UIK getrennt. Beim Aufeinanderlegen beider Teile greifen bevorzugt zwei komplementäre Verzahnungsringe, welche im Längsschnitt der Fig. 2a auf beiden Seiten durch einen mit V gekennzeichneten, strichlierten Kreis hervorgehoben sind, ineinander. Hierdurch ist eine unterbrechungsfreie Isolierwirkung des zweiteiligen Isolierkörpers gewährleistet. Schließlich ist der Isolierkörper noch vorteilhaft von einer Kapsel UM umgeben, welche bevorzugt aus schlagfestem, wärmebeständigem Kunststoff besteht. Bei der zweiteiligen Ausführung des Isolierkörpers gemäß Fig. 2a sind sowohl das Ober- als auch das Unterteil von einer Halbschalenkapsel umgeben. Die Halbschalen können wiederum im Bereich V an den Außenseiten der ineinandergreifenden Verzahnungsringe so miteinander verbunden werden, daß der hitzefeste Datenspeicher hermetisch verbunden ist.

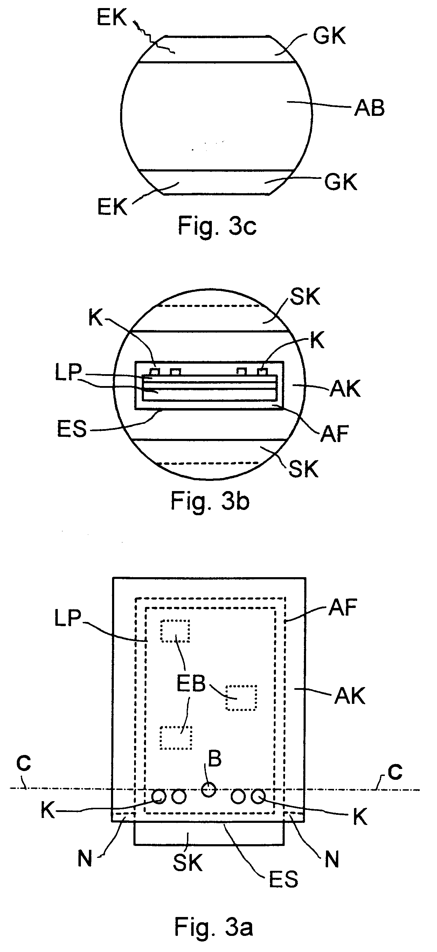

In den Fig.3a - 3c ist eine zweite Ausführungsform für einen Aufnahmeblock für elektrische Funktionselemente dargestellt, welcher eine zylinderförmige Form aufweist. Dessen wesentliche Elemente stimmen mit der Ausführung in den Figuren 1a bis 1c überein, so daß auf die dortigen Erläuterungen verwiesen werden kann. Auch in diesem Fall ist die Aufnahmeöffnung ES des Aufnahmefaches AF mit einer Abdeckplatte verschließbar, welche eine annähernd kreisförmige Form aufweist. Die in Fig.3c beispielhaft dargestellte Abdeckplatte AB besteht aus einer Kreisscheibe, bei der zwei gegenüber liegende Segmente zur Erzeugung von geraden, tangentialen Einschubkanten EK abgetrennt sind. Die Abdeckplatte weist an den Segmenten Abschrägungen GK auf. Bei einem Aufschieben einer derartigen Abdeckplatte AB auf die den Einschubschlitz ES aufweisenden Stirnseite des zylinderförmigen Aufnahmeblocks AK hintergreifen die abgeschrägten Einschubkanten EK im Querschnitt wiederum bevorzugt schwalbenschwanzförmige Haltekanten SK, welche beidseitig des Einschubschlitzes ES angebracht sind.

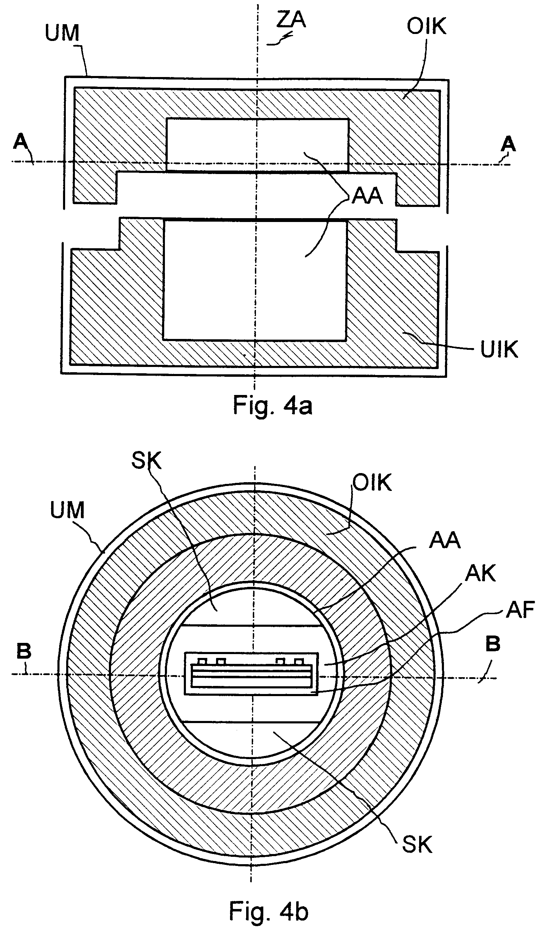

In den Figuren 4a und 4b sind, entsprechend den Darstellungen in den Figuren 2a und 2b, wiederum ein Längsschnitt entlang einer Schnittlinie B-B und ein Querschnitt entlang einer Schnittlinie A-A durch einen kompletten, hitzefesten Datenspeicher dargestellt. Dabei ist die Aufnahmekammer AA wiederum zentrisch und symmetrisch zur Rotationsachse ZA der Gesamtvorrichtung angeordnet. Zur Aufnahme eines zylindrischen Aufnahmeblocks gemäß der in den Figuren 3a bis 3c dargestellten Ausführung weist die Aufnahmekammer AA in diesem Fall eine Zylinderform auf. Es entsteht somit eine wärmetechnisch besonders vorteilhafte, bezüglich der Radialachse ZA nahezu vollständig rotationssymmetrische Anordnung. Dies ist in dem in der Fig.4b dargestellten Querschnitt deutlich zu erkennen.

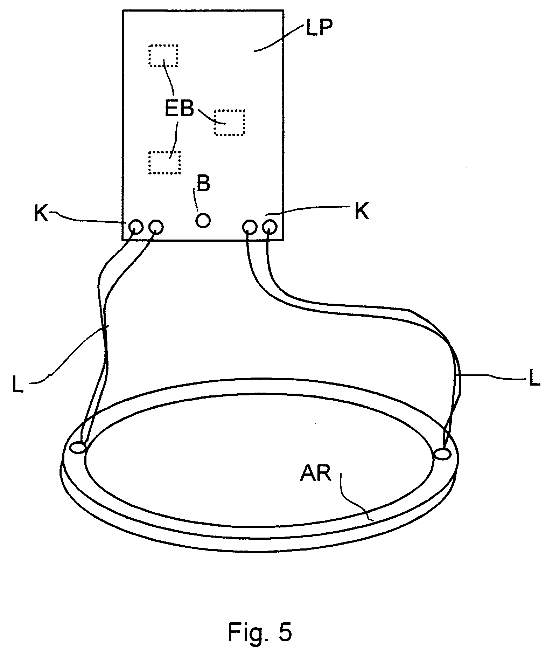

In Fig.5 ist schließlich dargestellt eine mit Bauelementen EB bestückte Leiterplatte LP als ein Beispiel für in die Aufnahmekammer AF eines Aufnahmeblocks AK einlegbare elektrische Funktionselemente. Dabei ist ein Antennenring AR über Leitungen L an den Kontakten K der Leiterplatte LP angeschlossen. Über den Antennenring AR können insbesondere die auf der Leiterplatte LP befindlichen Speicherelemente auf berührungslosem, induktivem Wege Daten mit externen Schreib- und Lesegeräten austauschen. Wie bereits oben erläutert, werden die Leitungen L entsprechend den Fig. 1a und 3a mittels Nuten aus dem Inneren des die Leiterplatte LP enthaltenden Aufnahmefaches AF herausgeführt. Der Antennenring AR kann vorteilhaft unmittelbar auf der Außenseite des Oberteiles OIK oder des Unterteiles UIK des Isolierkörpers gemäß den Darstellungen in den Figuren 2a bzw. 4a aufgelegt werden. Bei gekapselter Ausführung liegt er genau in dem Raum zwischen der Innenseite des Kapselbodens und der Außenseite eines der beiden Teile OIK, UIK des Isolierkörpers.

## Patentansprüche

1. Mobiler, hitzefester Datenspeicher, mit
a) einem Isolierkörper (OIK,UIK), der möglichst zentrisch im Inneren eine Aufnahmekammer (AA) aufweist, und mit
b) einem Aufnahmeblock (AK), der in die Aufnahmekammer (AA) einlegbar ist, wobei
b1) der Aufnahmeblock (AK) aus einem Material gefertigt ist, welches im Vergleich zum umgebenden Isolierkörper (OIK, UIK) eine große Wärmekapazität und Wärmeleitfähigkeit besitzt, insbesondere aus Eisen, und
b2) der Aufnahmeblock (AK) möglichst zentrisch im Inneren ein Aufnahmefach (AF) für elektrische Funktionselemente (BE) aufweist, welches mit einem Abdeckblock (AB) verschließbar ist.

2. Vorrichtung nach Anspruch 1, wobei der Abdeckblock (AB) annähernd die gleiche Wandstärke wie der Aufnahmeblock (AK) aufweist und aus dem gleichen Material gefertigt ist.

3. Vorrichtung nach einem der vorangegangenen Ansprüche, wobei der Aufnahmeblock (AK) eine zylindrische Form aufweist (Fig.3a,3b,3c).

4. Vorrichtung nach einem der vorangegangenen Ansprüche, wobei die Aufnahmekammer (AA) symmetrisch zur Radialachse (ZA) des Isolierkörpers (OIK,UIK) angeordnet ist (Fig.2a,2b; Fig.4a,4b).

5. Vorrichtung nach einem der vorangegangenen Ansprüche, wobei der Aufnahmeblock (AK) aus keramischem Material gefertigt ist, insbesondere aus einem keramischen Stein oder aus Olivinstein.

6. Vorrichtung nach einem der Ansprüche 1 bis 4, wobei der Aufnahmeblock (AK) aus oxydischem Material gefertigt ist, insbesondere aus einem Aluminium-Zyakon-Oxyd.

7. Vorrichtung nach einem der vorangegangenen Ansprüche, wobei der Isolierkörper (OIK,UIK) von einer Kapsel (UM) hermetisch dicht umgeben ist.

8. Vorrichtung nach Anspruch 7, wobei die Kapsel (UM) aus einem schlagfesten, wärmebeständigen Kunststoff besteht.
